Europäisches Patentamt

European Patent Office

Office européen des brevets

(11) Veröffentlichungsnummer: **0 087 053**
**B2**

(12) NEUE EUROPÄISCHE PATENTSCHRIFT

(45) Veröffentlichungstag der neuen Patentschrift:
19.12.90

(51) Int. Cl.⁵: **H 02 K 11/00**

(21) Anmeldenummer: 83101154.9

(22) Anmeldetag: 07.02.83

(54) Anordnung für eine rotierende Thyristorerregung.

(30) Priorität: 22.02.82 DE 3206388

(43) Veröffentlichungstag der Anmeldung:
31.08.83 Patentblatt 83/35

(45) Bekanntmachung des Hinweises auf die
Patenterteilung:
28.05.86 Patenblatt 86/22

(45) Bekanntmachung des Hinweises auf die
Entscheidung u"ber den Einspruch:
19.12.90 Patentblatt 90/51

(84) Benannte Vertragsstaaten:
CH LI NL

(56) Entgegenhaltungen:
CH-A- 438 475          DE-B-2 304 935
CH-A- 574 686          DE-B-2 359 578
DE-B-1 488 546          DE-B-2 366 003
DE-B-1 488 761          DE-B-2 433 464

Artikel von Ph. Rösch und W. Merhof:
"Bürstenloser Erregersatz für
Turbogeneratoren", BBC-Nachrichten, Jahrg. 59,
Heft 2 (1977), Seiten 83 bis 88

(73) Patentinhaber: Siemens Aktiengesellschaft
Wittelsbacherplatz 2
D-8000 München 2 (DE)

(72) Erfinder: Küter, Heinrich
verstorben (DE)
Erfinder: Klaar, Jürgen
Haydnstrasse 13
D-4133 Neukirchen-Vluyn (DE)

**Beschreibung**

Die Erfindung bezieht sich auf eine Anordnung für eine rotierende Thyristorerregung an elektrischen Maschinen, insbesondere an Turbogeneratoren, gemäß Oberbegriff des Anspruches 1.

Eine derartige Anordnung ist durch die DE-AS 23 59 578 bekannt. Bei dieser bekannten Anordnung soll eine verbesserte Störsicherheit bei der Ansteuerung der Thyristoren dadurch erreicht werden, daß die am Innenumfang des ersten Flanschringes angeordneten Leistungs-Bauteile und die am Innenumfang des zweiten Flanschringes angeordneten Ansteuereinheiten durch die als elekrische Abschirmung wirkende gemeinsame Nabe beider Flanschringe räumlich voneinander getrennt sind. Der erste Flanschring, welcher an seinem Innenumfang die Leistungs-Bauteile trägt, wirkt jedoch gleichzeitig als Gleichstrom-Sammelleitung, welche über die isoliert auf die Welle aufgesetzte Nabe und mindestens einen radialen Stromzuführungsbolzen mit der zugehörigen, axial in der Welle verlaufenden Gleichstromleitung verbunden ist. Die Abschirmwirkung der Nabe wird also dadurch beeinträchtigt, daß durch die Nabe hohe Ströme mit Spannungsspitzen geleitet werden, welche auf die Ansteuereinheiten störend zurückwirken. Dabei ist außerdem vorgesehen, daß das Trägerrad eine Zwillingsanordnung mit zwei Naben und jeder Nabe zugeordneten ersten und zweiten Flanschringen aufweist. Dies hat zwar den Vorteil, daß auf dem Innenumfang von zwei ersten und zweiten Flanschringen im Vergleich zu einer Einfachanordnung etwa gleichen Durchmessers die doppelte Anzahl an Leistungsteilen und Ansteuereinheiten untergebracht werden kann, jedoch wird dafür eine verhältnismäßig große axiale Baulänge benötigt.

Aus der DE-AS 1 488 761 geht das Konstruktions- und Schaltungsprinzip hervor, bei einem rotierenden Gleichrichtersatz die Nabe des Trägerrades einschließlich Flanschring elektrisch leitend mit der Welle zu verbinden, die Gleichstromsammelringe isoliert auf der Welle zu befestigen und Gleichrichter-Baueinheiten beider Polaritäten mit radial innenliegenden Gleichstrom-Anschlüssen über etwa radial gerichtete Verbindungsleiter mit den axial entsprechend auf der Welle positionierten Gleichstrom-Sammelringen sowie letztere mit den Stromzuführungsbolzen in der Welle zu verbinden.

Aus der CH-PS 438 475 ist eine rotierende Gleichrichteranordnung bekannt, deren Dioden unter Bildung einer Brückenschaltung zu Gruppen zusammengefaßt sind. Die einzelnen Dioden einer Gruppe wie auch die Gruppen selbst sind in Umfangsrichtung des Flanschringes aneinandergereiht. Die Gruppen sind jeweils unter Zwischenlage einer Isolation an dem Flanschring befestigt, wobei jeweils Gruppen unterschiedlicher Polarität einander abwechseln. Die zugehörigen Sicherungen sind dort an zugänglicher Stelle an dem axial äußeren Ende des Flanschringes angeordnet.

Bei einer aus der DE-AS 24 33 464 bekannten rotierenden Gleichrichteranordnung besteht der Flanschring aus einem die Dioden tragenden Trägerring, der auf dem Außenumfang der Nabe aufgeschrumpft ist, und einem Kappenring, der auf dem Außenumfang des Trägerringes aufgeschrumpft ist. Dadurch ist es möglich, den Kappenring mit einem gleichmäßigen Querschnitt ohne Befestigungsbohrungen für die Dioden auszuführen, so daß der Flanschring große Fliehkräfte aufnehmen kann, was einen hohen Bestükkungsgrad des Trägerringes zuläßt.

Der Erfindung liegt die Aufgabe zugrunde, die Anordnung für eine rotierende Thyristorerregung gemäß Oberbegriff des Anspruchs 1 so auszubilden, daß bei reduzierter axialer Baulänge im Vergleich zur gattungsgemäßen Anordnung die Störsicherheit bei der Ansteuerung der Thyristoren weiter verbessert wird. Diese Aufgabe wird durch die Gesamtheit der im kennzeichnenden Teil des Anspruchs 1 angegebenen Merkmale gelöst. Vorteilhafte Weiterbildungen sind in den Unteransprüchen 2 bis 4 angegeben.

Die mit der Erfindung erzielbaren Vorteile sind vor allem darin zu sehen, daß unter Beibehaltung der räumlichen Trennung von Leistungsteilen und Ansteuereinheiten trotz gedrängter axialer Bauweise eine gute Abschirmwirkung der Ansteuereinheiten erzielt wird. Der geringere Innendurchmesser des zweiten Flanschringes mit den Ansteuereinheiten bewirkt, daß diese nicht so großen Fliehkräften ausgesetzt sind wie die Leistungsteile.

Im folgenden wird ein Ausführungsbeispiel der Erfindung anhand der Zeichnung näher erläutert. Dabei zeigt

Fig. 1 eine Anordnung für eine rotierende Thyristorerregung im Längsschnitt.

Fig. 2 in einem etwas größer gewählten Maßstab einen teilweisen Längsschnitt durch die Welle im Bereich der Gleichstrom-Sammelringe, und

Fig. 3 in einem ebenfalls größer gewählten Maßstab einen teilweisen Querschnitt durch die in Fig. 1 dargestellte Anordnung in einem zwischen den Gleichstrom-Sammelringen und den zugehörigen Stromzuführungsbolzen liegenden Axialbereich.

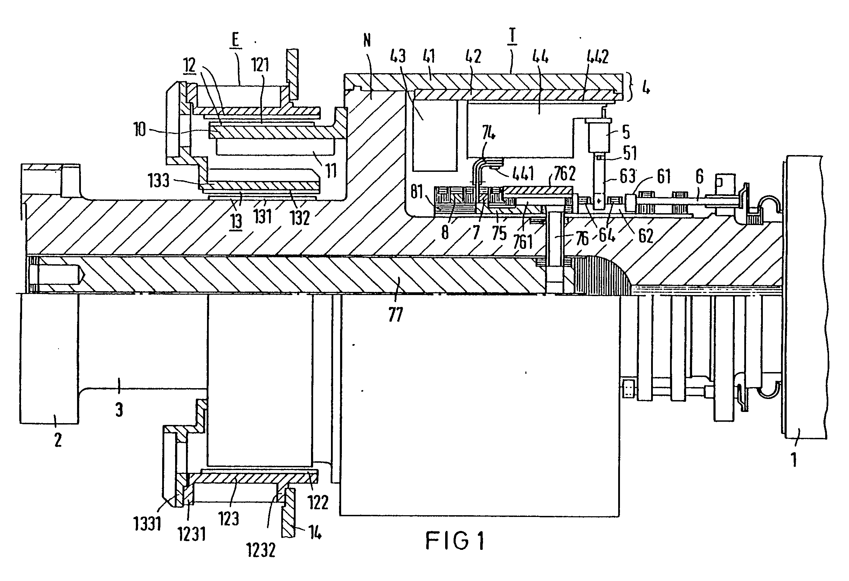

Fig. 1 zeigt einen Längsschnitt durch eine rotierende Thyristorerregung, welche zwischen dem Anker einer Drehstromerregermaschine 1 und einem für den Anschluß an die Welle eines Turbogenerators vorgesehenen Kupplungsflansch 2 auf einer Welle 3 angeordnet ist. Die rotierende Thyristorerregung besteht dabei im wesentlichen aus einem Thyristor-Rad T, welches sämtliche Leistungs-Bauteile trägt und aus dem Elektronik-Rad E, welches die gesamte Meß-, Steuer- und Versorgungselektronik trägt, wobei das Thyristor-Rad T und das Elektronik-Rad E eine gemeinsame an die Welle 3 angewachsene Nabe N besitzen. Die gemeinsame Nabe N liegt über die Welle 3 und eine in der Zeichnung nicht dargestellte Erdungsbürste der Welle 3 auf Erdpotential, so daß die Meß-, Steuer- und Versorgungselektronik des Elektronikrades E von den Störeinflüssen der Leistungs-Bauteile des Thyristor-Rades T wirksam abgeschirmt ist.

Das Thyristor-Rad T wird im einzelnen durch einen ersten Flanschring 4 gebildet, welcher seinerseits aus einem aus hochfestem Material bestehenden äußeren Kappenring 41 und einem mit axialem Abstand zur Nabe N angeordneten Trägerring 42 zusammengesetzt ist. Der beispielsweise aus Stahl bestehende und für die Aufnahme der Fliehkräfte vorgesehene Kappenring 41 ist dabei auf den Außenumfang der Nabe N und auf den Außenumfang des Trägerringes 42 derart aufgeschrumpft, daß sich der gesamte erste Flanschring 4 von der Nabe N ausgehend in axialer Richtung zu der Drehstromerregermaschine 1 hin erstreckt. Am Innenumfang des beispielsweise aus einer Aluminiumlegierung mit geringem Elastizitätsmodul bestehenden Trägerringes 42 sind nun zunächst in dem axial unmittelbar neben der Nabe N liegenden Bereich den einzelnen Thyristoren zugeordnete Schaltungsbausteine 43 angeordnet, welche die Widerstände und Kondensatoren der sogenannten RC-Beschaltung enthalten. Diese in Umfangsrichtung gleichmäßig verteilt angeordneten Beschaltungsbausteine 43 sind dabei über im Trägerring 42 verankerte und in der Zeichnung nicht näher dargestellte Befestigungsmittel gehalten. In dem in Fig. 1 dargestellten Längsschnitt ist in dem neben einem Beschaltungsbaustein 43 liegenden, der Drehstromerregermaschine 1 zugewandten Axialbereich eine Thyristor-Baueinheit 44 zu erkennen welche einen radial innenliegenden Gleichstrom-Anschluß 441 besitzt und an deren äußerer Stirnseite eine Sicherung 5 befestigt ist. Die in der Zeichnung lediglich schematisch als Block dargestellte Thyristor-Baueinheit 44 umfaßt einen Thyristor und einen Kühlkörper. Da es sich bei dem radial außenliegenden und mit der Sicherung 5 verbundenen Kühlkörper um ein stromführendes Bauteil handelt, ist die Thyristor-Baueinheit 44 isoliert am Innenumfang des auf Erdpotential liegenden Thyristor-Rades T angeordnet. Diese Isolierung erfolgt über eine zwischen der Thyristor-Baueinheit 44 und dem Trägerring 42 angeordnete Isolierbeilage 442. Zur Festlegung der Thyristor-Baueinheit 44 am Innenumfang des Thyristor-Rades T sind in der Zeichnung nicht dargestellte radiale Befestigungsschrauben vorgesehen, die durch die Thyristor-Baueinheit 44 isoliert hindurchgeführt und in dem Trägerring 42 verankert sind.

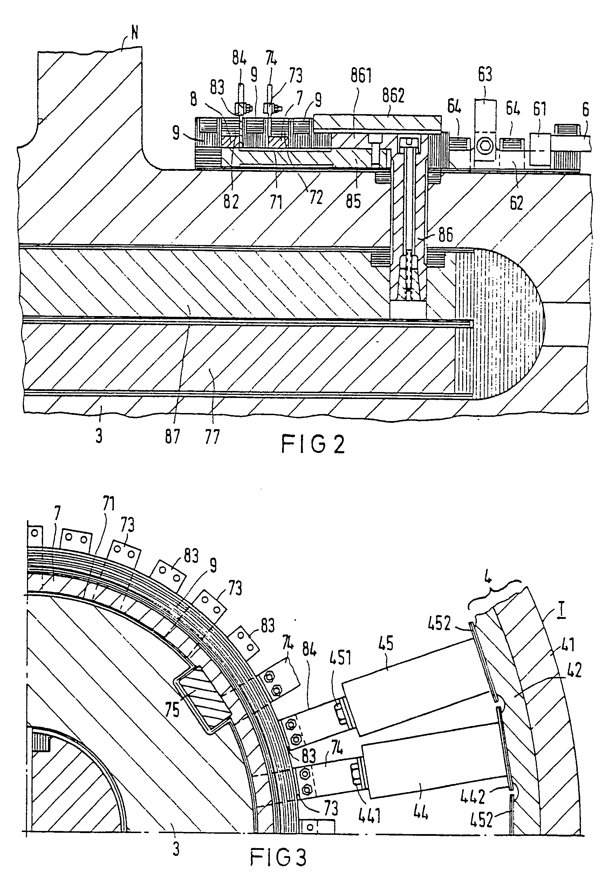

Um die axiale Baulänge der gesamten rotierenden Thyristorerregung möglichst kleinzuhalten sind am Innenumfang des Thyristor-Rades T Thyristor-Baueinheiten für beide Stromdurchgangsrichtungen des Erregerstromes angeordnet. Ist die in Fig. 1 dargestellte Thyristor-Baueinheit 44 der positiven Polarität des Erregerstromes zugeordnet, so sind gemäß Fig. 3 weitere der negativen Polarität des Erregerstromes zugeordnete Thyristor-Baueinheiten 45 vorhanden, wobei die Thyristor-Baueinheiten 44 und 45 in Umfangsrichtung des Thyristor-Rades T gesehen abwechselnd angeordnet sind. Die der negativen Polarität des Erregerstromes zugeordneten Thyristor-Baueinheiten 45 besitzen radial innenliegende Gleichstrom-Anschlüsse 451 und sind gegenüber dem Trägerring 42 durch Isolierbeilagen 452 isoliert. Die Thyristor-Baueinheiten 44 und 45 sind auch in axialer Richtung des Thyristor-Rades T gesehen versetzt angeordnet. Durch diese gestaffelte Anordnung ergibt sich eine äußerst platzsparende Bauweise. Unter der Voraussetzung, daß die größte in Umfangsrichtung gesehene Breite der Thyristor-Baueinheiten 44 bzw. 45 durch den Durchmesser der Thyristor-Scheibenzellen gegeben ist, läßt sich durch die Staffelung ein ausreichender Sicherheitsabstand der Thyristoren untereinander bei kleinerem Durchmesser des Thyristor-Rades T verwirklichen. Das gleiche gilt sinngemäß für die an der radoffenen Seite an den Kühlkörpern befestigten Sicherungen 5. Die Leitungsführung zwischen den radial innenliegenden Anschlüssen 51 der Sicherungen 5 und dem Anker der Drehstromerregermaschine 1 geht aus dem Längsschnitt der Fig. 1 und teilweise auch aus dem Längsschnitt der Fig. 2 hervor. Die von dem Anker der Drehstromerregermaschine 1 ausgehenden und auf der Oberfläche der Welle 3 gleichmäßig am Umfang verteilten Drehstromverbindungsleiter 6 sind zunächst als durchgehend offene Rohre ausgebildet, welche auf der dem Thyristor-Rad T zugewandten Seite über radiale Verbindungsstücke 61, auf kleinerem Durchmesser isoliert auf der Welle 3 angeordnete Haltestücke 62 und über radiale Anschlußlaschen 63 mit den Anschlüssen 51 der Sicherungen 5 verbunden sind. Die Fliehkraftbelastungen werden dabei durch isolierende Bandagen 64 aufgenommen, welche beiderseits der Anschlußlaschen 63 verlegt sind und die Haltestücke 62 auf der Welle 3 festlegen. Die weiteren Stromwege verlaufen durch die Sicherungen 5, durch die Kühlkörper und durch die Thyristoren der Thyristor-Baueinheiten 44 bzw. 45 zu den Gleichstrom-Anschlüssen 441 bzw. 451 (vgl. Fig. 3).

Das Gleichstromsystem, welches die Gleichstrom-Anschlüsse 441 bzw. 451 der Thyristor-Baueinheiten 44 bzw. 45 mit den zugehörigen, axial in der Welle 3 verlaufenden Gleichstromleitungen 77 bzw. 87 verbindet, wird im folgenden unter Hinweis auf die Fig. 1, 2 und 3 beschrieben. Den Gleichstrom-Anschlüssen 441 bzw. 451 sind Gleichstrom-Sammelringe 7 bzw. 8 zugeordnet, welche im Axialbereich des Thyristor-Rades T auf der Welle 3 drehfest angeordnet sind und gegenüber der Welle 3 durch Isolierbeilagen 71 bzw. 81 isoliert sind. Zur radialen Festlegung und zur Aufnahme der Fliehkraftbeanspruchungen der Gleichstrom-Sammelringe 7 bzw. 8 sind beispielsweise aus glasfaserverstärktem Kunstharz bestehende Bandagen 72 bzw. 82 vorgesehen, während die axiale Festlegung bzw. die Distanzierung in axialer Richtung durch insgesamt drei neben bzw. zwischen den Gleichstrom-Sammelringen 7 und 8 auf die Welle 3 aufbandagierte Isolierstoffringe 9 gewährleistet ist. Mit den Gleichstrom-Sammelringen 7 bzw. 8 sind radial vorstehende Anschlußlaschen 73 bzw. 83 fest verbunden, welche in Umfangsrichtung gesehen gleichmäßig verteilt angeordnet und mit den zugehörigen Gleichstrom-Anschlüssen 441 bzw. 451 der Thyristor-Baueinheiten 44 bzw. 45 über Verbindungsleiter 74 bzw. 84 verbunden sind. Diese Verbindungsleiter 74 bzw. 84 sind dabei in radialer Richtung ausgerichtet und lediglich im Bereich der Gleichstrom-Anschlüsse 441 bzw. 451 in die axiale Richtung abgekröpft. Damit die Thyristor-Baueinheiten 44 und 45 leicht ausgebaut und ausgewechselt werden können, sind die radialen Verbindungsleiter 74 bzw. 84 lösbar befestigt. Die Gleichstrom-Sammelringe 7 bzw. 8 sind andererseits über in axialer Richtung verlaufende Leiterstücke 75 bzw. 85 und radiale Stromzuführungsbolzen 76 bzw. 86 mit den zugehörigen, axial in der Welle verlaufenden Gleichstromleitungen 77 bzw. 87 verbunden. Dabei können in Umfangsrichtung versetzt auch mehrere dieser Leiterstücke 75 bzw. 85 und radialen Stromzuführungsbolzen 76 bzw. 86 vorgesehen sein. Die Leiterstücke 75 bzw. 85 sind mit dem Innenumfang der Gleichstrom-Sammelringe 7 bzw. 8 fest verbunden und an ihren anderen Enden mit am Kopf des zugehörigen radialen Stromzuführungsbolzens 76 bzw. 86 angewachsenen Laschen 761 bzw. 861 überlappt verschraubt. Die Leiterstücke 75 bzw. 85 verlaufen dabei in axialen Nuten der Welle 3, wobei diese axialen Nuten im Bereich eines Wellenabsatzes mit größerem Durchmesser radial nach außen durch Keile 762 bzw. 862 verschlossen sind. Diese Keile 762 bzw. 862 stützen die Leiterstücke 75 bzw. 85 und die radialen Stromzuführungsbolzen 76 bzw. 86 radial nach außen gegen die auftretenden Fliehkräfte ab. Dadurch, daß durch die Leiterstücke 75 bzw. 85 ein axialer Abstand zwischen den Gleichstrom-Sammelringen 7 bzw. 8 und den zugehörigen radialen Stromzuführungsbolzen 76 bzw. 86 entsteht, können letztere im Bedarfsfall leicht ausgebaut werden, ohne die Gleichstrom-Sammelringe 7 bzw. 8 von der Welle 3 zu lösen.

Das Elektronik-Rad E wird gemäß Fig. 1 im einzelnen durch einen zweiten Flanschring 10 gebildet, welcher auf der der Drehstromerregermaschine 1 abgewandten Seite der Nabe N angeordnet und seitlich an die Nabe N angeflanscht ist. Vgl. hierzu die mit der EP-A-00 87 052 veröffentlichte Europäische Patentanmeldung gleicher Priorität wie die vorliegende. Jene Anmeldung hat eine mit dem Elektronik-Rad E verbundene Anordnung für eine kontakt- und berührungslose Übertragung von Meß- und Steuersignalen zum Gegenstand. Dabei liegt auch der zweite Flanschring 10 auf Erdpotential, womit die Abschirmwirkung der Nabe N gegen Störeinflüsse der Leistungs-Bauteile des Thyristor-Rades T und gegen Störeinflüsse der Drehstromerregermaschine 1 weiter verbessert wird. Am Innenumfang des zweiten Flanschringes 10 sind gleichmäßig über den Umfang verteilt Ansteuereinheiten 11 angeordnet, wobei die in der Zeichnung nicht dargestellten Leiter für die Ansteuerung der Thyristoren durch die Nabe N isoliert hindurchgeführt sind. Der Innenumfang des zweiten Flanschringes 10 ist im Querschnitt polygonal ausgebildet, so daß an jeder ebenen Fläche des Polygons jeweils eine Ansteuereinheit 11 mit in der Zeichnung nicht dargestellten Befestigungsmitteln angebracht werden kann. Außerdem ist aus der Zeichnung ersichtlich, daß der Innendurchmesser des zweiten Flanschringes 10 geringer ist, als der Innendurchmesser des ersten Flanschringes 4. Dadurch ergeben sich für die in den Ansteuereinheiten 11 untergebrachten Elektronik-Bauteile wesentlich geringere Fliehkraftbeanspruchungen als für die weniger empfindlichen Leistungs-Bauteile des Thyristor-Rades T.

Wie bereits ausgeführt wurde, trägt das Elektronik-Rad E die gesamte in den einzelnen Ansteuereinheiten 11 enthaltene Meß-, Steuer- und Versorgungselektronik. Zusätzlich ist für die Übertragung der Meß- und Steuergrößen auf die rotierende Welle 3 und von der Welle 3 auf die ruhenden Anlagenteile eine induktive Signalübertragung vorgesehen, die für eine Übertragungsrichtung auf der Welle 3 und für die andere Übertragungsrichtung auf dem Elektronik-Rad E angeordnet ist. Dabei wird durch die Abschirmwirkung der Nabe N, des ersten Flanschringes 4 und des zweiten Flanschringes 10 eine ungestörte Signalübertragung ermöglicht. Wie aus dem Schnittbild der Fig. 1 hervorgeht, besteht diese induktive Signalübertragung im einzelnen, aus einer ersten induktiven Signalübertragungseinrichtung 12 und einer zweiten induktiven Signalübertragungseinrichtung 13. Der rotierende Teil 121 der ersten induktiven Signalübertragungseinrichtung 12 ist am Außenumfang des zweiten Flanschringes 10 angeordnet, während der rotierende Teil 131 der zweiten induktiven Signalübertragungseinrichtung 13 im Axialbereich des zweiten Flanschringes 10 auf der Welle 3 angeordnet ist. Die feststehenden Teile 122 bzw. 132 der ersten bzw. der zweiten induktiven Signalübertragungseinrichtung 12 bzw. 13 sind am Innenumfang von Tragbüchsen 123 bzw. 133 angeordnet, wobei die beiden Tragbüchsen 123 und 133 in dem außerhalb des zweiten Flanschringes 10 liegenden Axialbereich über Flanschteile 1231 bzw. 1331 konzentrisch zueinander ausgerichtet und fest miteinander verbunden sind. Auf diese Weise können dann die beiden Tragbüchsen 123 und 133 gemeinsam über einen weiteren Flansch 1232 der äußeren Tragbüchse 123 an einem Befestigungsring 14 des die rotierende Thyristorerregung umgebenden Maschinengehäuses befestigt und auch gemeinsam zentriert werden. Durch die auf Erdpotential liegenden Tragbüchsen 123 und 133 wird die Abschirmung der beiden induktiven Signalübertragungseinrichtungen 12 und 13 weiter verbessert. Außerdem kann durch die konzentrische Anordnung der beiden induktiven Signalübertragungseinrichtungen 12 und 13 die axiale Baulänge der rotierenden Thyristorerregung weiter verringert werden.

Die rotierenden Teile 121 und 131 und die feststehenden Teile 122 und 132 der beiden induktiven Signalübertragungseinrichtungen 12 und 13 bestehen beispielsweise aus einem glasfaserverstärkten Kunstharz, wobei die darin eingebetteten Spulen in der Zeichnung nicht näher dargestellt sind. Es handelt sich dabei um mehrere Spulen, die über den Umfang und in axialer Richtung systematisch so verteilt sind, daß in jeder Lage der Welle 3 eine gleichbleibende und ungestörte Signalübertragung möglich ist. Diese erfolgt mittels einer Spannungs-Frequenz-Umsetzung in einem Frequenzbereich von 10 bis 100 KHz.

**Patentansprüche**

1. Anordnung für eine rotierende Thyristorerregung an elektrischen Maschinen, insbesondere an Turbogeneratoren, mit wenigstens einem Trägerrad, bei welchem die am Innenumfang eines ersten Flanschringes (4) angeordneten Leistungsteile, bestehend aus Thyristor-Baueinheiten (44, 45) mit daran befestigten Kühlkörpern sowie aus der zugeordneten Schutzbeschaltung (43) und die am Innenumfang eines zweiten Flanschringes (10) angeordneten Ansteuereinheiten (11, 12) durch die drehfest mit der Welle verbundene gemeinsame Nabe (N) beider Flanschringe räumlich voneinander getrennt und abgeschirmt sind, welche Flanschringe sich von der Nabe ausgehend in entgegengesetzte axiale Richtungen erstrecken, wobei die Gleichstromanschlüsse der Thyristor-Baueinheiten über Stromzuführungsbolzen (76, 96) mit axial in der Welle verlaufenden Gleichstromleitungen (77, 87) verbunden sind, und wobei die Schutzbeschaltung (43) am axial äußeren Ende des ersten Flanschringes (4) angeordnet ist, gekennzeichnet durch die Gesamtheit folgender Merkmale:

a) die Nabe (N) ist auf Erdpotential gelegt und mit der Welle (3) und den Flanschringen (4, 10) elektrisch leitend verbunden,

b) die radial innenliegenden Gleichstromanschlüsse der Thyristor-Baueinheiten sind über etwa radial gerichtete Verbindungsleiter (74, 84) mit zueinander axial beabstandeten Gleichstrom-Sammelringen (7, 8) auf der Welle (3) verbunden,

c) am Innenumfang des ersten Flanschringes (4) sind die Thyristor-Baueinheiten (44, 45) für beide Stromdurchgangsrichtungen in Umfangsrichtung aneinandergereiht isoliert befestigt, wobei die Thyristor-Baueinheiten (44) für die eine Stromdurchgangsrichtung und die Thyristor-Baueinheiten (45) für die andere Stromdurchgangsrichtung in Umfangsrichtung des ersten Flanschringes (4) einander abwechseln und in gestaffelter Anordnung abwechselnd axial zueinander versetzt angeordnet sind,

d) der erste Flanschring (4) ist aus einem äußeren Kappenring (41) und einem mit axialem Abstand zur Nabe (N) angeordneten Trägerring (42) zusammengesetzt, wobei der Kappenring (41) auf den Außenumfang der Nabe (N) und den des Trägerringes (42) aufgeschrumpft ist, und

e) der Innendurchmesser des zweiten Flanschringes (10) ist geringer als der Innendurchmesser des ersten Flanschringes (4).

2. Anordnung nach Anspruch 1, dadurch gekennzeichnet, daß der Innenumfang des zweiten Flanschringes (10) im Querschnitt polygonal mit ebenen Befestigungsflächen für die Ansteuereinheiten (11) ausgebildet ist.

3. Anordnung nach Anspruch 1 oder 2, dadurch gekennzeichnet, daß am Außenumfang des zweiten Flanschringes (10) der rotierende Teil (121) einer ersten induktiven Signalübertragungseinrichtung (12) und im Axialbereich des zweiten Flanschringes (10) der rotierende Teil (131) einer zweiten induktiven Signalübertragungseinrichtung (13) auf der Welle (3) befestigt ist.

4. Anordnung nach Anspruch 3, dadurch gekennzeichnet, daß der feststehende Teil (122) der ersten induktiven Signalüberwachungseinrichtung (12) und der feststehende Teil (132) der zweiten induktiven Signalübertragungseinrichtung (13) miteinander mechanisch verbunden und gemeinsam zentrierbar sind.

**Revendications**

1. Dispositif pour une excitation rotative par thyristors de machines électriques, en particulier de turbo-alternateurs, avec au moins une roue de support, dans laquelle les éléments de puissance qui sont disposés sur la périphérie intérieure d'une première bride annulaire (4) et qui sont constitués par des modules à thyristors (44, 45) avec des corps de refroidissement qui y sont fixés, et par le câblage de protection associé (43), et dans laquelle les unités d'attaque (11, 12) qui sont disposées sur la périphérie intérieure d'une seconde bride annulaire (10), sont séparées spatialement entre elles par le moyeu commun (N) des deux brides annulaires, qui est solidaire en rotation avec l'arbre, tout en étant blindées, lesquelles brides annulaires s'étendent, en partant du moyeu, suivant des directions axiales opposées, la réalisation étant telle que les bornes de courant continu des modules à thyristors sont reliés par des boulons d'alimentation en courant (76, 96) avec des conducteurs de courant continu (77, 97) qui s'étendent axialement dans l'arbre, alors que le câblage de protection (43) est disposé à l'extrémité axiale extérieure de la première bride annulaire (4), caractérisée par la totalité des particularités suivantes:

a) le moyeu (N) est porté au potentiel terre et il est relié électriquement avec l'arbre (3) et avec les brides annulaires (4, 10),

b) les bornes de courant continu des modules à thyristors, et qui se situent radialement à l'intérieur, sont reliés par l'intermédiaire de conducteurs de liaison (74, 84) qui s'étendent à peu près radialement, avec des bagues collectrices du courant continu (7, 8) qui sont montées sur l'arbre (3) avec des espacements axiaux entre elles,

c) à la périphérie intérieure de la première bride annulaire (4), sont fixés avec isolation et suivant un alignement périphérique, les modules à thyristors (44, 45) pour les deux sens de passage du courant, la réalisation étant telle que les modules à thyristors (44) pour un sens de passage du courant et les modules à thyristores (45) pour l'autre sens de passage du courant sont disposés, dans la direction périphériques de la première bride annulaire (4) en alternance et suivant une disposition échelonnée et alternée avec décalage axial,

d) la première bride annulaire (4) est composée par un anneau de capot extérieur (41) et par un anneau de support (42) disposé à distance axiale du moyeu (N), l'anneau de capot (41) étant emmanché à chaud sur la périphérie extérieur du moyeu (N) et sur la périphérie extérieure de l'anneau de support (42), et

e) le diamètre intérieur de la seconde bride annulaire (10) est plus petit que le diamètre intérieur de la première bride annulaire (4).

2. Dispositif selon la revendication 1, caractérisé par le fait que la périphérie intérieure de la seconde bride annulaire (10) est réalisé avec une section transversale polygonale avec des surfaces de fixation planes pour les unités d'attaque (11).

3. Dispositif selon la revendication 1 ou 2, caractérisé par le fait qu'à la périphérie extérieure de la seconde bride annulaire (10) est fixée sur l'arbre (3) la partie tournante (121) d'un premier dispositif inductif de transmission des signaux (12) et dans la zone axiale de la seconde bride annulaire (10) est fixée sur l'arbre (3), la partie tournante (131) d'un second dispositif inductif de transmission des signaux.

4. Dispositif selon la revendication 3, caractérisé par le fait que la partie fixe du premier dispositif inductif de transmission des signaux (12) et la partie fixe (132) du second dispositif inductif de transmission des signaux (13) sont reliés mécaniquement entre elles et elles sont susceptibles d'être centrées en commun.

**Claims**

1. An arrangement for a rotating thyristor excitation on electric machines, in particular turbogenerators with at least one carrier wheel, in which the power circuitry arranged on the inner periphery of a first flange ring (4), consisting of thyristor units (44, 45) with cooling bodies secured thereon, as well as of the RC-circuit (43) and the control units (11, 12) arranged on the inner periphery of a second flange ring (10) are shielded and spatially separated from each other by the common hub (N) of both flange rings connected in a rotation-resistant manner to the shaft, said flange rings extending from the hub emanating in opposing axial directions, wherein the direct current terminals of the thyristor units are connected by way of power supply bolts (76, 96) to direct current lines (77, 97), extending axially in the shaft, and wherein the RC-circuit (43) is arranged on the axial outer end of the first flange ring (4), characterised by all the following features:

a) the hub (N) is applied to earth potential and is connected to the shaft (3) and the flange rings (4, 10) in an electrically conductive manner,

b) the radially inner lying direct current terminals of the thyristor units are connected by way of radially directed connecting conductors (74, 84) to direct current collecting rings (7, 8) axially distanced from each other on the shaft (3),

c) on the inner periphery of the first flange ring (4) the thyristor units (44, 45) for both conducting directions are secured in an insulated manner and butt-mounted in the circumferential direction, wherein the thyristor units (44) for the one conducting direction and the thyristor units (45) for the other conducting direction alternate with each other in the circumferential direction of the first flange ring (4) and are arranged in staggered arrangement alternately axially offset to each other,

d) the first flange ring (4) is composed of an outer cap ring (41) and a carrier ring (42) arranged with axial spacing to the hub (N), wherein the cap ring (41) is shrunk on the outer periphery of the hub (N) and that of the carrier ring (42),

e) and the inner diameter of the second flange ring (10) is smaller than the inner diameter of the first flange ring (4).

2. An arrangement according to claim 1, characterised in that the inner periphery of the second flange ring (10) in the cross-section is constructed in a polygonal manner with plane securing faces for the control units (11).

3. An arrangement according to claim 1 or 2, characterised in that secured on the outer periphery of the second flange ring (1) is the rotating part (121) of a first inductive signal transfer device (12) and in the axial region of the second flange ring (1) the rotating part (131) of a second inductive signal transfer device (13) is secured on the shaft (3).

4. An arrangement according to claim 3, characterised in that the stationary part (122) of the first inductive signal monitoring device (12) and the stationary part (132) of the second inductive signal transfer device (13) are connected mechanically to each other and are able to be centred commonly.

FIG 1

FIG 2

FIG 3